# FASCICULE DE BREVET EUROPEEN

(11) **EP 4 658 557 B1**
(45) Date de publication et mention de la délivrance du brevet: **02.09.2026**
(21) Numéro de dépôt: 24702974.7
(22) Date de dépôt: 31.01.2024
(51) Int. Cl.: B64B 1/06, B64C 13/18, B64D 1/22

(54) **AMORTISSEMENT ACTIF DES OSCILLATIONS DE LA CHARGE UTILE PAR COMMANDES DE VOL AUTOMATIQUES**
AKTIVE DÄMPFUNG DER SCHWINGUNGEN DER NUTZLAST DURCH AUTOMATISCHE FLUGSTEUERUNGEN
ACTIVE DAMPING OF PAYLOAD OSCILLATIONS BY AUTOMATIC FLIGHT CONTROLS

(30) Priorité: 31.01.2023 FR 2300897
(43) Date de publication de la demande: 10.12.2025
(73) Titulaire: Flying Whales, 92150 Suresnes (FR)
(72) Inventeur: SETTIER, Kewin, 92210 SAINT-CLOUD (FR)
(74) Mandataire: IP Trust
(86) Numéro de dépôt international: PCT/EP2024/052349
(87) Numéro de publication internationale: WO 2024/160882

(56) Documents cités:
- FR-A1- 2 547 272
- FR-A1- 3 053 313
- US-A1- 2018 072 417
- US-A1- 2022 371 729
- US-B1- 9 146 557

## Description

### Domaine technique

La présente invention concerne un procédé pour amortir des oscillations d'une charge utile d'un dirigeable de manière active. Elle vise également un dispositif mettant en œuvre un tel procédé.

Le domaine de l'invention est plus particulièrement, mais de manière non limitative, celui des ballons dirigeables à structure rigide, notamment celui des dirigeables porteurs de charge lourde.

### État de la technique antérieure

La sécurité d'un ballon dirigeable doit être assurée par la maîtrise de la charge qu'il embarque, de sorte que celle-ci soit sensiblement constante dans le temps.

Les étapes de levage, de transport et de dépose de charge utile présentant une masse importante au moyen d'un aérostat impliquent donc de résoudre une problématique liée à la variation de poids d'un aérostat qui n'est pas ramené à terre à chacun des embarquements ou débarquements des charges utiles.

Pour accomplir sa mission, un ballon dirigeable doit effectuer un vol stationnaire précis pendant la phase d'échange de charge. Ce vol est effectué à l'aide de commandes de vol automatiques pour maintenir la position du dirigeable au-dessus de la zone d'échange de charge avec une poussée vectorisée.

Pendant cette phase, le ballon dirigeable subit des perturbations, telles que des rafales de vent. Pour pouvoir charger ou décharger la charge utile en toute sécurité, ces oscillations doivent être amorties.

Cependant, pendant le hissage, la charge utile peut commencer à osciller. Pour pouvoir charger ou décharger la charge utile en toute sécurité, ces oscillations doivent être amorties.

Le document US 2018/072417 A1 divulgue un procédé et un système permettant de détecter et de corriger des erreurs lors du ramassage et de l'abaissement d'une charge utile couplée à une attache d'un système de treuil disposé sur un véhicule aérien sans pilote (UAV).

Le document US 2022/371729 A1 divulgue un système et un procédé de livraison aérienne de charges utiles incorporant une manœuvre de déploiement à vitesse nulle ou quasi nulle qui permet à un aéronef de déployer en douceur des charges utiles sans les larguer et sans nécessiter que l'aéronef atterrisse. Un multicoptère équipé de ce mécanisme abaisse la charge utile pour atterrir en douceur en quelques secondes sans avoir besoin de survoler la destination.

Le document FR2547272 A1 divulgue un système de levage de charge aérien composé d'une unité plus légère que l'air, telle qu'un dirigeable, au-dessous de laquelle est suspendue une unité motorisée plus lourde que l'air, telle qu'un hélicoptère, par exemple. Cette dernière unité produit une poussée qui peut être dirigée verticalement, vers le haut ou vers le bas, ou inclinée pour un mouvement de translation dans n'importe quelle direction. Les unités sont reliées par un élément de tension flexible tel qu'un câble.

Le document US 9146557 B1 divulgue un procédé de commande adaptative pour un véhicule aérien sans pilote, tel qu'un drone quadrirotor ou similaire, avec une charge suspendue, utilisant un contrôleur de linéarisation à rétroaction pour effectuer un décollage, un vol stationnaire et un atterrissage vertical. Des états, tels que le roulis, le tangage, le lacet et/ou l'altitude, sont sélectionnés comme sorties et la technique de linéarisation par rétroaction est utilisée.

Le document FR 3053313 A1 divulgue un hélicoptère comportant une cellule à laquelle est accroché un câble supportant une charge, un dispositif de détection disposé au niveau de la cellule d'hélicoptère pour la détection de la position de la charge et un dispositif de commande de vol automatique raccordé au dispositif de détection pour la stabilisation et le positionnement de la charge.

L'invention propose une solution pour amortir les oscillations de la charge utile en utilisant des commandes de vol automatiques par des poussées vectorisées, tout en maintenant le dirigeable au-dessus de la zone d'échange de charge.

### Exposé de l'invention

Un but de l'invention est notamment de remédier à tout ou partie des inconvénients précités.

Une idée qui est à la base de l'invention consiste à :
- contrôler la position horizontale du dirigeable en utilisant la poussée vectorielle pour maintenir sa position au-dessus de la zone d'échange de charge. L'automatisation se fait grâce à des mesures inertielles et des mesures GPS couplées à un mode de contrôle de vol automatique dédié appelé « auto hover ».
- pendant le hissage de la charge utile, amortir les oscillations de la charge utile en ajustant la vitesse au sol du dirigeable à l'aide de poussées vectorielles. L'automatisation se fait par des mesures d'angles et de longueurs de câbles.
- coupler les deux modes de contrôle pour maintenir la position du dirigeable au-dessus de la zone de chargement en compensant les rafales, et amortir activement les oscillations de la charge utile.

Aussi, selon la revendication 1, dans un premier aspect de l'invention, il est proposé un dirigeable.

Le module de mesure d'angle peut comprendre un capteur pour mesurer un angle relatif entre le câble et l'axe vertical du dirigeable.

En particulier, le module de mesure d'angle peut comprendre des moyens pour compenser l'angle relatif ainsi mesuré pour tenir compte de l'angle d'attitude du dirigeable, en utilisant des mesures d'un système de référence d'attitude et de cap (AHRS) pour obtenir une mesure de l'angle relatif du câble avec la terre verticale.

Avantageusement, le module de mesure de longueur de câble est agencé pour déterminer une estimation la longueur de câble déployé à partir d'une information de position angulaire du treuil, du rayon du treuil et du rapport de poulie possible dans le trajet du câble entre le treuil et un point de déploiement du câble.

De préférence, le contrôleur de position est configuré pour recevoir en entrée une estimation de la vitesse au sol et une estimation de la position du dirigeable et comprend un régulateur PD qui génère une commande de vitesse prévue pour être envoyée au module de calcul.

Le contrôleur de position peut en outre implémenter un filtre de Kalman prévu pour traiter des informations de vitesse au sol, d'accélération et de position du dirigeable générées par un système de référence d'attitude et de cap (et un système de géolocalisation et de navigation par satellite.

Avantageusement, le contrôleur de position implémente un modèle de simulation dynamique de vol pour procurer une régulation quadratique linéaire.

Selon une possibilité, le contrôleur de vitesse au sol du dirigeable est prévu pour recevoir en entrée une estimation de la vitesse au sol et une estimation de l'accélération qui sont générées par le filtre de Kalman, et implémente un régulateur PID qui génère des commandes adressées aux propulseurs du dirigeable.

Le contrôleur de vitesse au sol peut implémenter un modèle de simulation dynamique de vol pour procurer une régulation quadratique linéaire.

Selon la revendication 10, dans un deuxième aspect de l'invention, il est proposé un procédé d'amortissement d'oscillation d'une charge utile levée par un dirigeable selon le premier aspect de l'invention.

L'étape de mesure d'angle peut comprendre une mesure d'un angle relatif entre le câble et l'axe vertical du dirigeable.

En particulier, l'étape de mesure d'angle peut comprendre une compensation de l'angle relatif ainsi mesuré pour tenir compte de l'angle d'attitude du dirigeable, en utilisant des mesures d'un système de référence d'attitude et de cap pour déterminer l'angle relatif du câble avec la terre verticale.

Avantageusement, l'étape de mesure de longueur de câble comprend une estimation la longueur de câble déployé à partir d'une information de position angulaire du treuil, du rayon du treuil et du rapport de poulie possible dans le trajet du câble entre le treuil et un point de déploiement du câble.

De préférence, le contrôle de position est configuré pour traiter une estimation de la vitesse au sol et une estimation de la position du dirigeable et comprend un régulation PD qui génère une commande de vitesse prévue pour être envoyée au module de calcul.

Le contrôle de position peut en outre implémenter un filtrage de Kalman prévu pour traiter des informations de vitesse au sol, d'accélération et de position du dirigeable générées par un système de référence d'attitude et de cap et un système de géolocalisation et de navigation par satellite.

Avantageusement, le contrôle de position implémente un modèle de simulation dynamique de vol pour procurer une régulation quadratique linéaire.

Selon une possibilité, le contrôle de vitesse au sol du dirigeable est prévu pour traiter en entrée une estimation de la vitesse au sol et une estimation de l'accélération qui sont générées par le filtre de Kalman, et comprend une régulation PID qui génère des commandes adressées aux propulseurs du dirigeable.

Le contrôle de vitesse au sol peut implémenter un modèle de simulation dynamique de vol pour procurer une régulation quadratique linéaire.

### Description des figures

D'autres avantages et particularités de l'invention apparaîtront à la lecture de la description détaillée de mises en œuvre et de modes de réalisation nullement limitatifs, au regard de dessins annexés sur lesquels :
- la [Fig.1] illustre un exemple de réalisation d'un dirigeable selon l'invention,
- la [Fig.2] est un schéma d'un dispositif d'amortissement selon l'invention, et
- la [Fig.3] illustre schématiquement des vues du dirigeable selon l'invention, respectivement latérale et arrière, représentant la longueur du câble et les angles respectivement longitudinal et latéral du câble par rapport à une verticale passant par un point de déploiement du câble.

### Description de modes de réalisation

Les modes de réalisation décrits ci-après n'étant nullement limitatifs, on pourra notamment considérer des variantes de l'invention dans la mesure où elles entrent dans le cadre des revendications,

Sur les figures un élément apparaissant sur plusieurs figures conserve la même référence.

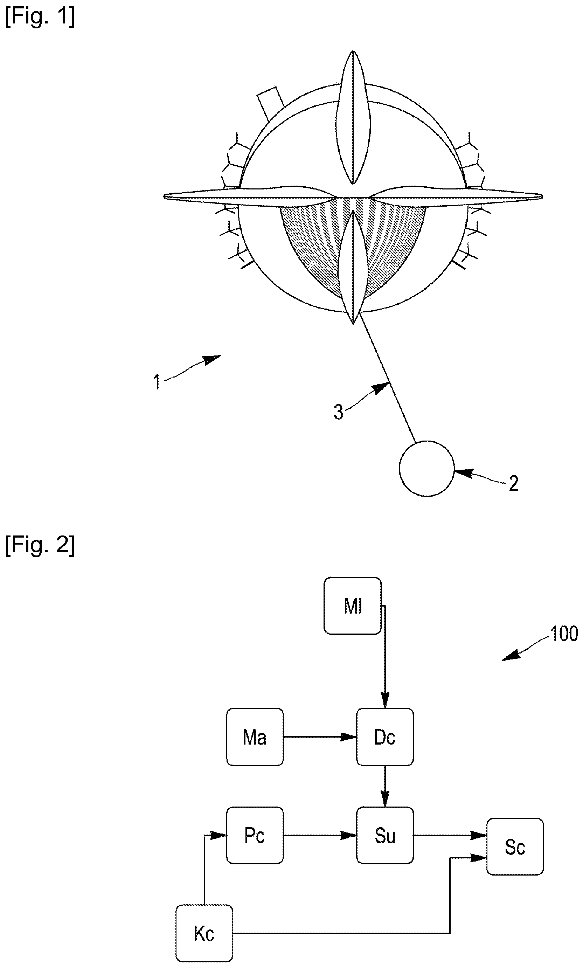

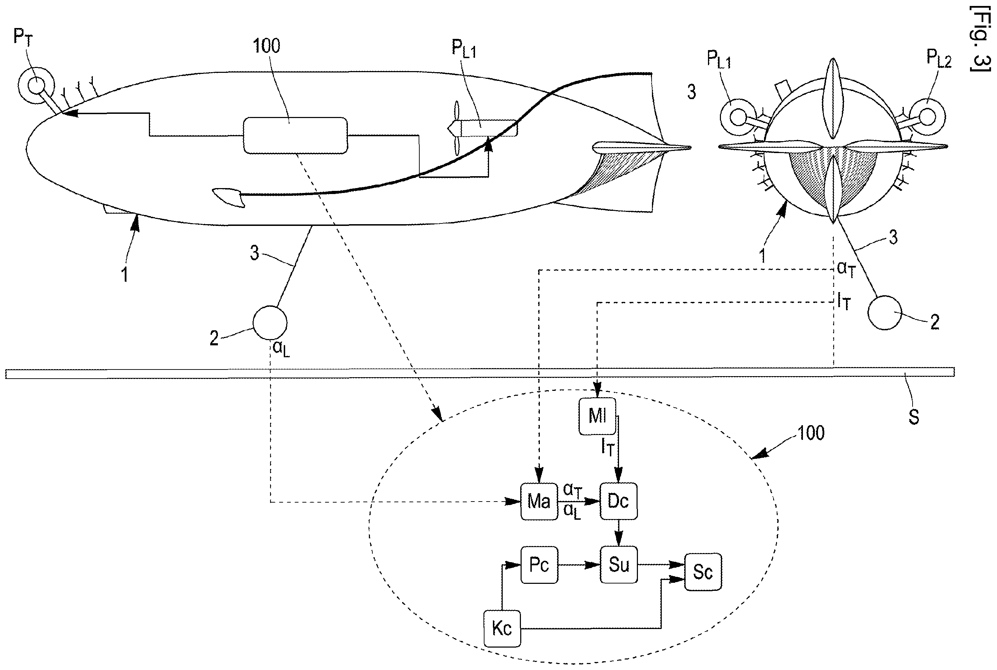

[Fig.1] illustre un dirigeable 1, vue de l'arrière, procédant au levage d'une charge 2 au moyen d'un câble 3. Le dirigeable 1 est par exemple équipé d'un ensemble de propulseurs longitudinaux ou axiaux dont seuls deux P_{L1}, P_{L2} sont représentés en [Fig.3], d'un ensemble de propulseurs latéraux ou transversaux dont seul un P_{T} est représenté en [Fig.3], et d'un treuil, non représenté, sur lequel est enroulé le câble 3 pendant l'opération de levage.

Comme cela est illustré, le câble peut former un angle avec l'axe de lacet du dirigeable, ce qui peut engendrer des oscillations pendulaires de la charge dans le référentiel du dirigeable.

Aussi, les oscillations de la charge utile doivent être amorties avant l'entrée dans la soute, lors du chargement, ou avant de toucher le dirigeable, lors du déchargement.

[Fig.2] illustre un mode de réalisation d'un dispositif 100 selon l'invention équipant le dirigeable 1.

[Fig.3] illustre les mesures de longueur du câble déployé et d'angle respectivement longitudinal α_{L} et latéral α_{T} du câble par rapport à la verticale.

Le dispositif d'amortissement 100, intégré dans le dirigeable 1, comporte :
- un module Ma de mesure de l'angle α_{L}, α_{T} formé par le câble 3 avec la verticale, à la fois selon un plan longitudinal et selon un plan transverse ;
- un module Ml de mesure de la longueur de câble déployé ;
- un contrôleur d'amortissements Dc, pour l'anglais *Damping controller,* pour déterminer des ajustements de vitesse du dirigeable 1, à partir des mesures reçues des modules Ma et Mi, pour produire des commandes de vitesse-sol à partir de la boucle d'amortissement ;
- un contrôleur de position Pc, pour l'anglais Position controller, pour produire des commandes de vitesses ;
- un module de calcul Su, pour combiner les commandes de vitesses du contrôleur d'amortissements Dc et du contrôleur de position Pc, et former une commande de vitesse finale ;
- un contrôleur de vitesse Sc, pour l'anglais Speed controller, pour produire des commandes de poussée des propulseurs longitudinaux P_{L1}, P_{L2} et latéraux _{PT}.

### Module Ma de mesure de l'angle

L'angle relatif du câble 3 avec l'axe vertical de la terre S est estimé en utilisant un capteur positionné sur le point de déploiement qui mesure l'angle relatif entre le câble et l'axe vertical du dirigeable 1. Cet angle est ensuite compensé pour tenir compte de l'angle d'attitude du dirigeable 1 en utilisant les mesures de l'AHRS (tangage et roulis) pour obtenir l'angle relatif du câble avec la terre verticale.

### Module Ml de mesure de longueur du câble

La longueur de câble déployé est déterminée à partir de la position angulaire du treuil, du rayon du treuil et du rapport de poulie possible dans le trajet du câble 3 entre le treuil et le point de déploiement.

### Contrôleur d'amortissements Dc

Le contrôleur d'amortissements Dc est configuré pour calculer une fréquence d'oscillation de la charge utile 2 à partir de l'estimation de la longueur du câble et de la valeur de la gravité locale (par exemple considérée comme constante g=9,81). Cette fréquence est notée « Payload_freq » et peut s'écrite :
$Payload _ freq = \frac{1}{2 π} \sqrt{\frac{g}{l}}$

Pour une longueur de câble donnée, un régulateur PID (proportionnel, intégral, dérivé) est prévu en utilisant un modèle dynamique à une dimension d'un pendule avec un point attaché mobile. L'entrée du régulateur est l'angle du câble, et la sortie du régulateur est une commande de vitesse au point d'attache.

Les gains du régulateur sont ensuite programmés pour toutes les longueurs de câble du domaine opérationnel, par exemple pour une fréquence d'oscillation de charge utile comprise entre 0,15 Hz et 0,05 Hz.

Lorsque la fréquence de coupure du contrôleur régulateur obtenue est supérieure à la capacité des actionneurs (propulseurs du dirigeable 1), cela implique que la fonction d'amortissement n'est pas fonctionnelle sur ce domaine.

Le régulateur PID défini précédemment est mis en œuvre pour amortir les oscillations longitudinales.

Il prend en entrée l'angle longitudinal du câble estimé précédemment, ainsi que la longueur estimée du câble pour la détermination du gain.

Il émet une commande de vitesse longitudinale delta qui adressée au module de calcul Su.

Le même principe est appliqué pour l'axe latéral.

### Module de Kalman Kc

La vitesse au sol et la position du dirigeable sont déterminées à l'aide de mesures GNSS et AHRS (latitude, longitude, altitude, accélérations et attitude).

Les mesures de ces capteurs sont fusionnées à l'aide d'un filtre de Kalman ou d'un filtre complémentaire, afin de fournir une estimation de l'accélération, de la vitesse au sol et de la position. Le filtre compense également le biais de mesure d'un système l'AHRS, pour l'anglais *Attitude and Heading Reference System,* permettant de définir la position angulaire d'un avion dans l'espace grâce aux accélérations et aux champs magnétiques qu'ils subissent.

### Contrôleur de position Pc

Le module Pc est configuré pour recevoir en entrée une vitesse au sol et la position du dirigeable générées par le filtre de Kalman Kc.

Le contrôleur de position du dirigeable 1 est un régulateur PD (proportionnel, dérivé) qui génère une commande de vitesse qui est envoyée au module de calcul Su.

Le réglage du contrôleur de position Pc du dirigeable 1 est effectué à l'aide d'un modèle de simulation de dynamique de vol avec une approche LQR (pour l'anglais *Linear Quadratic Regulator*).

### Module de calcul Su

Le module de calcul Su reçoit en entrée la commande de vitesse delta provenant du contrôleur d'amortissement Dc et une commande de vitesse provenant du contrôleur de position Pc.

La commande de vitesse delta est additionnée à la commande du contrôleur de position du dirigeable 1 pour l'axe longitudinal.

### Contrôleur de vitesse au sol Sc

Le contrôleur de vitesse au sol Sc du dirigeable 1 reçoit en entrée une estimation de la vitesse au sol S et de l'accélération générée par le filtre Kalman Kc.

Le contrôleur de vitesse du dirigeable 1 est un régulateur PID (proportionnel, intégral, dérivé) qui génère des commandes adressées à des propulseurs P_{L1}, P_{L2} ; P_{T} du dirigeable 1.

Le réglage du contrôleur de vitesse au sol Sc est effectué à l'aide d'un modèle de simulation de dynamique de vol avec une approche LQR (pour l'anglais *Linear Quadratic Regulator*).

Bien sûr, l'invention n'est pas limitée aux exemples qui viennent d'être décrits et de nombreux aménagements peuvent être apportés à ces exemples sans sortir du cadre de 1 invention telle que définie par les revendications annexées. De plus, les différentes caractéristiques, formes, variantes et modes de réalisation de l'invention peuvent être associés les uns avec les autres selon diverses combinaisons dans la mesure elles entrent dans le cadre des revendications annexées.

En particulier, des dirigeables selon l'invention peuvent présenter divers nombres de propulseurs longitudinaux et latéraux.

La charge utile peut présenter divers formats, notamment un format parallélépipédique tel que celui de conteneurs. Elle peut aussi être constituée d'un panier prévu pour recevoir une ou plusieurs charges.

Plusieurs dispositifs d'amortissement selon l'invention peuvent aussi être mis en œuvre au sein d'un dirigeable équipé d'une pluralité de treuils et de câbles prévus pour gérer une charge utile de grande dimension.

## Revendications

1. Dirigeable (1) équipé de propulseurs respectivement longitudinaux (P_{L1}, P_{L2}) et latéraux (P_{T}) et d'un dispositif (100) d'amortissement d'oscillation d'une charge utile (2) maintenue par un câble (3) au-dessus d'une zone d'échange, ce câble (3) ayant une première extrémité fixée à la charge utile (2) et une seconde extrémité reliée à un treuil d'enroulement, ce dirigeable (1) comportant :
• un module de mesure d'angle (Ma) configuré pour mesurer un angle formé par le câble (3) avec la verticale à la fois selon un plan longitudinal (αL) et selon un plan transversal (αT) ;
• un module de mesure de longueur (Ml) configuré pour mesurer une longueur de câble déployé (l(t)) entre la première extrémité et la seconde extrémité ;
• un contrôleur d'amortissement (Dc) pour déterminer des ajustements de vitesse du dirigeable, à partir des mesures reçues dudit module de mesure d'angle (Ma) et dudit module de mesure de longueur (Ml), configuré pour produire des commandes de vitesse pour amortir les oscillations pendulaires de la charge ;
• un contrôleur de position (Pc) configuré pour générer des commandes de vitesses de façon à maintenir le dirigeable au-dessus de la zone d'échange ;
• un module de calcul (Su), configuré pour combiner les commandes de vitesses du contrôleur d'amortissement (Dc) et du contrôleur de position (Pc), et générer une commande de vitesse finale ;
• un contrôleur de vitesse (Sc) configuré pour générer des commandes de poussée à destination des propulseurs du dirigeable, **caractérisé en ce que** le contrôleur d'amortissement (Dc) est configuré pour calculer une fréquence d'oscillation de la charge utile (2) à partir de la mesure de longueur de câble déployé l(t) délivrée par le module de mesure de longueur (Ml) et d'une valeur de gravité locale, et implémente un régulateur proportionnel, intégral, dérivé (PID) prévu pour recevoir en entrée les mesures d'angle respectivement longitudinal (α_{L}) et transversal (α_{T}) délivrées par le module de mesure d'angle (Ma) et pour délivrer les commandes de vitesse respectivement longitudinale et latérale aux propulseurs respectivement longitudinaux (P_{L1}, P_{L2}) et latéraux (P_{T}) du dirigeable, ledit régulateur PID ayant des gains programmés pour toutes les longueurs de câble du domaine opérationnel.

2. Dirigeable (1) selon la revendication précédente, **caractérisé en ce que** le module de mesure d'angle (Ma) comprend un capteur pour mesurer un angle relatif entre le câble (3) et l'axe vertical du dirigeable (1).

3. Dirigeable (1) selon la revendication précédente, **caractérisé en ce que** le module de mesure d'angle (Ma) comprend des moyens pour compenser l'angle relatif ainsi mesuré pour tenir compte de l'angle d'attitude du dirigeable (1), en utilisant des mesures d'un système de référence d'attitude et de cap (AHRS) pour obtenir une mesure de l'angle relatif du câble (3) avec la terre verticale.

4. Dirigeable (1) selon l'une quelconque des revendications précédentes, **caractérisé en ce que** le module de mesure de longueur de câble (Ml) est agencé pour déterminer une estimation la longueur (l(t)) de câble déployé à partir d'une information de position angulaire du treuil, du rayon du treuil et du rapport de poulie possible dans le trajet du câble (3) entre le treuil et un point de déploiement du câble (3).

5. Dirigeable (1) selon la revendication précédente, **caractérisé en ce que** le contrôleur de position (Pc) est configuré pour recevoir en entrée une estimation de la vitesse au sol (S) et une estimation de la position du dirigeable (1) et comprend un régulateur proportionnel, dérivé (PD) qui génère une commande de vitesse prévue pour être envoyée au module de calcul (Su).

6. Dirigeable (1) selon la revendication précédente, **caractérisé en ce que** le contrôleur de position (Pc) implémente en outre un filtre de Kalman (Kc) prévu pour traiter des informations de vitesse au sol, d'accélération et de position du dirigeable (1) générées par un système de référence d'attitude et de cap (AHRS) et un système de géolocalisation et de navigation par satellite (GNSS).

7. Dirigeable (1) selon la revendication précédente, **caractérisé en ce que** le contrôleur de position (Pc) implémente un modèle de simulation dynamique de vol pour procurer une régulation quadratique linéaire (LQR).

8. Dirigeable (1) selon la revendication précédente, **caractérisé en ce que** le contrôleur de vitesse au sol (Sc) du dirigeable (1) est prévu pour recevoir en entrée une estimation de la vitesse au sol et une estimation de l'accélération qui sont générées par le filtre de Kalman (Kc), et implémente un régulateur PID qui génère des commandes adressées aux propulseurs (PL1, PL2 ; PT) du dirigeable (1).

9. Dirigeable (1) selon la revendication précédente, **caractérisé en ce que** le contrôleur de vitesse au sol (Sc) implémente un modèle de simulation dynamique de vol pour procurer une régulation quadratique linéaire (LQR).

10. Procédé d'amortissement d'oscillation d'une charge utile (2) levée par un dirigeable (1) ledit procédé comportant les étapes suivantes:
• une mesure avec le module de mesure d'angle (Ma) de l'angle formé par le câble avec la verticale, à la fois selon un plan longitudinal (αL) et selon un plan transversal (αT), et une mesure avec le module de mesure de longueur (Ml) de la longueur (l(t)) de câble déployé entre la première extrémité et la seconde extrémité ;
• un contrôle d'amortissement avec le contrôleur d'amortissement (Dc) comprenant une détermination d'ajustements de vitesse du dirigeable (1), à partir des mesures réalisées, pour produire des commandes de vitesse pour amortir les oscillations pendulaires de la charge (2) ;
• un contrôle de position avec le contrôleur de position (Pc) comprenant une génération de commandes de vitesses pour maintenir le dirigeable (1) au-dessus de la zone d'échange ;
• une combinaison avec le module de calcul (Su) des commandes de vitesses déterminés par le contrôleur d'amortissement (Dc) et le contrôleur de position (Pc) pour générer une commande de vitesse finale ;
• un contrôle de vitesse avec le contrôleur de vitesse (Sc) pour générer des commandes de poussée à destination des propulseurs du dirigeable.
**caractérisé en ce que** le contrôle d'amortissement comprend un calcul d'une fréquence d'oscillation de la charge utile à partir de la mesure de longueur de câble déployé délivrée par le module de mesure de longueur (Ml) et d'une valeur de gravité locale, et une régulation proportionnel, intégral, dérivé (PID) prévue pour traiter les mesures d'angle respectivement longitudinal et transversal délivrées par le module de mesure d'angle (Ma) et pour délivrer les commandes de vitesse respectivement longitudinale et latérale aux propulseurs (PL1, PL2 ; PT) respectivement longitudinaux et latéraux du dirigeable (1).

11. Procédé selon la revendication précédente, **caractérisé en ce que** l'étape de mesure d'angle (Ma) comprend une mesure d'un angle relatif entre le câble (3) et l'axe vertical du dirigeable (1).

12. Procédé selon la revendication précédente, **caractérisé en ce que** l'étape de mesure d'angle (Ma) comprend une compensation de l'angle relatif ainsi mesuré pour tenir compte de l'angle d'attitude du dirigeable (1), en utilisant des mesures d'un système de référence d'attitude et de cap (AHRS) pour déterminer l'angle relatif du câble (3) avec la terre verticale.

13. Procédé selon la revendication 11 ou 12, **caractérisé en ce que** l'étape de mesure de longueur de câble (Ml) comprend une estimation de la longueur de câble déployé à partir d'une information de position angulaire du treuil, du rayon du treuil et du rapport de poulie possible dans le trajet du câble (3) entre le treuil et un point de déploiement du câble (3).

14. Procédé selon la revendication précédente, **caractérisé en ce que** le contrôle de position (Pc) est configurée pour traiter une estimation de la vitesse au sol et une estimation de la position du dirigeable (1) et comprend un régulation proportionnel, dérivé (PD) qui génère une commande de vitesse prévue pour être envoyée au module de calcul (Su).

15. Procédé selon la revendication précédente, **caractérisé en ce que** le contrôle de position (Pc) implémente en outre un filtrage de Kalman (Kc) prévu pour traiter des informations de vitesse au sol (S), d'accélération et de position du dirigeable (1) générées par un système de référence d'attitude et de cap (AHRS) et un système de géolocalisation et de navigation par satellite (GNSS).

16. Procédé selon la revendication précédente, **caractérisé en ce que** le contrôle de position (Pc) implémente un modèle de simulation dynamique de vol pour procurer une régulation quadratique linéaire (LQR).

17. Procédé selon la revendication précédente, **caractérisé en ce que** le contrôle de vitesse au sol (Sc) du dirigeable (1) est prévu pour traiter en entrée une estimation de la vitesse au sol et une estimation de l'accélération qui sont générées par le filtre de Kalman (Kc), et comprend une régulation PID qui génère des commandes adressées aux propulseurs (PL1, PL2 ; PT) du dirigeable (1).

18. Procédé selon la revendication précédente, **caractérisé en ce que** le contrôle de vitesse au sol (Sc) implémente un modèle de simulation dynamique de vol pour procurer une régulation quadratique linéaire (LQR).

## Patentansprüche

1. Luftschiff (1), ausgestattet mit Längs- (P_{L1}, P_{L2}) bzw. Quer(P_{T})-Triebwerken und einer Vorrichtung (100) für eine Schwingungsdämpfung einer Nutzlast (2), die durch ein Kabel (3) über einer Austauschzone gehalten wird, wobei dieses Kabel (3) ein erstes Ende, das an der Nutzlast (2) befestigt ist, und ein zweites Ende aufweist, das mit einer Aufwickelwinde verbunden ist, wobei dieses Luftschiff (1) umfasst:
• ein Winkelmessmodul (Ma), das zum Messen eines Winkels, der durch das Kabel (3) mit der Vertikalen ausgebildet wird, sowohl in einer Längsebene (αL) als auch in einer Querebene (αT) konfiguriert ist;
• ein Längenmessmodul (Ml), das zum Messen einer Länge des ausgefahrenen Kabels (1(t)) zwischen dem ersten Ende und dem zweiten Ende konfiguriert ist;
• eine Dämpfungssteuerung (Dc) zum Bestimmen von Geschwindigkeitsanpassungen des Luftschiffs anhand der von dem Winkelmessmodul (Ma) und dem Längenmessmodul (Ml) empfangenen Messungen, die zum Erzeugen von Geschwindigkeitsbefehlen zum Dämpfen der Pendelschwingungen der Last konfiguriert ist;
• eine Positionssteuerung (Pc), die zum Generieren von Geschwindigkeitsbefehlen, um das Luftschiff über der Austauschzone zu halten, konfiguriert ist;
• ein Berechnungsmodul (Su), das zum Kombinieren der Geschwindigkeitsbefehle der Dämpfungssteuerung (Dc) und der Positionssteuerung (Pc) und zum Generieren eines finalen Geschwindigkeitsbefehls konfiguriert ist;
• eine Geschwindigkeitssteuerung (Sc), die zum Generieren von Schubbefehlen, gezielt für die Triebwerke des Luftschiffs, konfiguriert ist,
**dadurch gekennzeichnet, dass** die Dämpfungssteuerung (Dc) konfiguriert ist zum Berechnen einer Schwingungsfrequenz der Nutzlast (2) anhand der von dem Längenmessmodul (Ml) gelieferten Messung der ausgefahrenen Kabellänge l(t) und eines lokalen Schwerkraftwerts, und einen Proportional-Integral-Differential-Regler (PID) implementiert, der zum Empfangen, als Eingabe, der jeweiligen Längswinkelmessungen (αL) und Querwinkelmessungen (α_{T}), ausgegeben von dem Winkelmessmodul (Ma), und zum Ausgeben der Längs- bzw. Quergeschwindigkeitsbefehle an die jeweiligen Längs- (P_{L1}, P_{L2}) und Quer(P_{T})-Triebwerke des Luftschiffs vorgesehen ist, wobei der PID-Regler programmierte Verstärkungsfaktoren für alle Kabellängen des Betriebsbereichs aufweist.

2. Luftschiff (1) nach dem vorstehenden Anspruch, **dadurch gekennzeichnet, dass** das Winkelmessmodul (Ma) einen Sensor zum Messen eines relativen Winkels zwischen dem Kabel (3) und der vertikalen Achse des Luftschiffs (1) umfasst.

3. Luftschiff (1) nach dem vorstehenden Anspruch, **dadurch gekennzeichnet, dass** das Winkelmessmodul (Ma) Mittel zum Kompensieren des so gemessenen relativen Winkels zum Berücksichtigen des Lagewinkels des Luftschiffs (1) unter Verwendung von Messungen eines Lage- und Kursreferenzsystems (AHRS) zum Erhalten einer Messung des relativen Winkels des Kabels (3) zu der Erdvertikalen umfasst.

4. Luftschiff (1) nach einem der vorstehenden Ansprüche, **dadurch gekennzeichnet, dass** das Kabellängenmessmodul (Ml) zum Bestimmen einer Schätzung der Länge (l(t)) des ausgefahrenen Kabels anhand von Informationen über die Winkelposition der Winde, den Radius der Winde und die mögliche Riemenscheibenübersetzung in der Bahn des Kabels (3) zwischen der Winde und einem Ausfahrpunkt des Kabels (3) angeordnet ist.

5. Luftschiff (1) nach dem vorstehenden Anspruch, **dadurch gekennzeichnet, dass** die Positionssteuerung (Pc) zum Empfangen, als Eingabe, einer Schätzung der Bodengeschwindigkeit (S) und einer Schätzung der Position des Luftschiffs (1) konfiguriert ist, und einen Proportional-Differential-Regler (PD) umfasst, der einen Geschwindigkeitsbefehl generiert, der vorgesehen ist, an das Berechnungsmodul (Su) gesendet zu werden.

6. Luftschiff (1) nach dem vorstehenden Anspruch, **dadurch gekennzeichnet, dass** die Positionssteuerung (Pc) ferner einen Kalman-Filter (Kc) implementiert, der zum Verarbeiten von Informationen über die Bodengeschwindigkeit, die Beschleunigung und die Position des Luftschiffs (1) vorgesehen ist, die durch ein Kurs- und Lagereferenzsystem (AHRS) und ein globales Navigationssatellitensystem (GNSS) generiert werden.

7. Luftschiff (1) nach dem vorstehenden Anspruch, **dadurch gekennzeichnet, dass** die Positionssteuerung (Pc) ein dynamisches Flugsimulationsmodell implementiert, zum Bereitstellen einer linear-quadratischen Regelung (LQR).

8. Luftschiff (1) nach dem vorstehenden Anspruch, **dadurch gekennzeichnet, dass** die Bodengeschwindigkeitssteuerung (Sc) des Luftschiffs (1) zum Empfangen, als Eingabe, einer Schätzung der Bodengeschwindigkeit und einer Schätzung der Beschleunigung vorgesehen ist, die durch den Kalman-Filter (Kc) generiert werden, und einen PID-Regler implementiert, der Befehle generiert, die an die Triebwerke (PL1, PL2; PT) des Luftschiffs (1) gerichtet sind.

9. Luftschiff (1) nach dem vorstehenden Anspruch, **dadurch gekennzeichnet, dass** die Bodengeschwindigkeitssteuerung (Sc) ein dynamisches Flugsimulationsmodell implementiert, zum Bereitstellen einer linear-quadratischen Regelung (LQR).

10. Verfahren zum Schwingungsdämpfen einer Nutzlast (2), die durch ein Luftschiff (1) nach Anspruch 1 gehoben wird, wobei das Verfahren die folgenden Schritte umfasst:
• Messen, mit dem Winkelmessmodul (Ma), des Winkels, der durch das Kabel mit der Vertikalen ausgebildet wird, sowohl in einer Längsebene (αL) als auch in einer Querebene (αT) und Messen, mit dem Längenmessmodul (Ml), der Länge (l(t)) des ausgefahrenen Kabels zwischen dem ersten Ende und dem zweiten Ende;
• Dämpfungssteuern, mit der Dämpfungssteuerung (Dc), umfassend ein Bestimmen von Geschwindigkeitsanpassungen des Luftschiffs (1) anhand von den vorgenommenen Messungen, zum Erzeugen von Geschwindigkeitsbefehlen zum Dämpfen der Pendelschwingungen der Last (2);
• Positionssteuern, mit der Positionssteuerung (Pc), umfassend ein Generieren von Geschwindigkeitsbefehlen, zum Halten des Luftschiffs (1) über der Austauschzone;
• Kombinieren, mit dem Berechnungsmodul (Su), der Geschwindigkeitsbefehle, die durch die Dämpfungssteuerung (Dc) und die Positionssteuerung (Pc) bestimmt werden, zum Generieren eines endgültigen Geschwindigkeitsbefehls;
• Geschwindigkeitssteuern, mit der Geschwindigkeitssteuerung (Sc) zum Generieren von Schubbefehlen, gezielt für die Triebwerke des Luftschiffs,
**dadurch gekennzeichnet, dass** die Dämpfungssteuerung eine Berechnung einer Schwingungsfrequenz der Nutzlast anhand der von dem Längenmessmodul (Ml) gelieferten Messung der Länge des ausgefahrenen Kabels und eines lokalen Schwerkraftwerts und eine Proportional-Integral-Differential-Regelung (PID) umfasst, die zum Verarbeiten der von dem Winkelmessmodul (Ma) gelieferten Längs- bzw. Querwinkelmessungen und zum Liefern der Längs- bzw. Quergeschwindigkeitsbefehle an die Längs- bzw. Quertriebwerke (PL1, PL2; PT) des Luftschiffs (1) vorgesehen ist.

11. Verfahren nach dem vorstehenden Anspruch, **dadurch gekennzeichnet, dass** der Schritt der Winkelmessung (Ma) eine Messung eines relativen Winkels zwischen dem Kabel (3) und der vertikalen Achse des Luftschiffs (1) umfasst.

12. Verfahren nach dem vorstehenden Anspruch, **dadurch gekennzeichnet, dass** der Schritt der Winkelmessung (Ma) eine Kompensation des so gemessenen relativen Winkels zum Berücksichtigen des Lagewinkels des Luftschiffs (1) unter Verwendung von Messungen eines Lage- und Kursreferenzsystems (AHRS) zum Bestimmen des relativen Winkels des Kabels (3) zu der Erdvertikalen umfasst.

13. Verfahren nach Anspruch 11 oder 12, **dadurch gekennzeichnet, dass** der Schritt der Kabellängenmessung (Ml) eine Schätzung der Länge des ausgefahrenen Kabels anhand von Informationen über die Winkelposition der Winde, den Radius der Winde und die mögliche Riemenscheibenübersetzung in der Bahn des Kabels (3) zwischen der Winde und einem Ausfahrpunkt des Kabels (3) umfasst.

14. Verfahren nach dem vorstehenden Anspruch, **dadurch gekennzeichnet, dass** die Positionssteuerung (Pc) zum Verarbeiten einer Schätzung der Bodengeschwindigkeit und einer Schätzung der Position des Luftschiffs (1) konfiguriert ist, und eine Proportional-Differential-Regelung (PD) umfasst, die einen Geschwindigkeitsbefehl generiert, der vorgesehen ist, an das Berechnungsmodul (Su) gesendet zu werden.

15. Verfahren nach dem vorstehenden Anspruch, **dadurch gekennzeichnet, dass** die Positionssteuerung (Pc) ferner einen Kalman-Filter (Kc) implementiert, der zum Verarbeiten von Informationen über die Bodengeschwindigkeit (S), die Beschleunigung und die Position des Luftschiffs (1) vorgesehen ist, die durch ein Kurs- und Lagereferenzsystem (AHRS) und ein globales Navigationssatellitensystem (GNSS) generiert werden.

16. Verfahren nach dem vorstehenden Anspruch, **dadurch gekennzeichnet, dass** die Positionssteuerung (Pc) ein dynamisches Flugsimulationsmodell implementiert, zum Bereitstellen einer linear-quadratischen Regelung (LQR).

17. Verfahren nach dem vorstehenden Anspruch, **dadurch gekennzeichnet, dass** die Bodengeschwindigkeitssteuerung (Sc) des Luftschiffs (1) zum Verarbeiten, als Eingabe, einer Schätzung der Bodengeschwindigkeit und einer Schätzung der Beschleunigung vorgesehen ist, die durch den Kalman-Filter (Kc) generiert werden, und eine PID-Regelung umfasst, die Befehle generiert, die an die Triebwerke (PL1, PL2; PT) des Luftschiffs (1) gerichtet sind.

18. Verfahren nach dem vorstehenden Anspruch, **dadurch gekennzeichnet, dass** die Bodengeschwindigkeitssteuerung (Sc) ein dynamisches Flugsimulationsmodell implementiert, zum Bereitstellen einer linear-quadratischen Regelung (LQR).

## Claims

1. An airship (1) equipped with longitudinal (P_{L1}, P_{L2}) and lateral (P_{T}) thrusters, respectively, and with a device (100) for damping the oscillation of a payload (2) held by a cable (3) above a handover zone, this cable (3) having a first end attached to the payload (2) and a second end connected to a winding winch, this airship (1) comprising:
• an angle measurement module (Ma) configured to measure an angle formed by the cable (3) with respect to the vertical, both in a longitudinal plane (αL) and in a transverse plane (αT);
• a length measurement module (Ml) configured to measure a length of deployed cable (1(t)) between the first end and the second end;
• a damping controller (Dc) for determining speed adjustments of the airship, on the basis of the measurements received from said angle measurement module (Ma) and from said length measurement module (Ml), configured to produce speed control commands for damping the pendular oscillations of the load;
• a position controller (Pc) configured to generate speed control commands for keeping the airship above the handover zone;
• a computing module (Su), configured to combine the speed control commands from the damping controller (Dc) and from the position controller (Pc), and to generate a final speed control command;
• a speed controller (Sc) configured to generate thrust commands for the thrusters of the airship,
**characterized in that** the damping controller (Dc) is configured to compute an oscillation frequency of the payload (2) on the basis of the deployed cable length measurement l(t) delivered by the length measurement module (Ml) and on the basis of a local gravity value, and implements a proportional-integral-derivative (PID) controller intended to receive as input longitudinal (α_{L}) and transverse (α_{T}) angle measurements, respectively, delivered by the angle measurement module (Ma) and to deliver longitudinal and lateral speed control commands, respectively, to the longitudinal (P_{L1}, P_{L2}) and lateral (P_{T}) thrusters of the airship, respectively, said PID controller having gains programmed for all the cable lengths within the operating range.

2. The airship (1) according to the preceding claim, **characterized in that** the angle measurement module (Ma) comprises a sensor for measuring a relative angle between the cable (3) and the vertical axis of the airship (1).

3. The airship (1) according to the preceding claim, **characterized in that** the angle measurement module (Ma) comprises means to compensate for the relative angle thus measured to take account of the attitude angle of the airship (1), using measurements from an attitude and heading reference system (AHRS) in order to obtain a measurement of the relative angle of the cable (3) with respect to the Earth vertical.

4. The airship (1) according to any of the preceding claims, **characterized in that** the cable length measurement module (Ml) is arranged to determine an estimate of the length (1(t)) of deployed cable on the basis of information on the angular position of the winch, the winch radius and the possible pulley ratio in the path of the cable (3) between the winch and a deployment point of the cable (3).

5. The airship (1) according to the preceding claim, **characterized in that** the position controller (Pc) is configured to receive as input an estimate of the ground speed (S) and an estimate of the position of the airship (1) and comprises a proportional-derivative (PD) controller which generates a speed control command intended to be sent to the computing module (Su).

6. The airship (1) according to the preceding claim, **characterized in that** the position controller (Pc) further implements a Kalman filter (Kc) intended to process information on ground speed, acceleration and position of the airship (1) generated by an attitude and heading reference system (AHRS) and a satellite-based geolocation and navigation system (GNSS).

7. The airship (1) according to the preceding claim, **characterized in that** the position controller (Pc) implements a dynamic flight simulation model to provide linear-quadratic regulation (LQR).

8. The airship (1) according to the preceding claim, **characterized in that** the ground speed controller (Sc) of the airship (1) is intended to receive as input an estimate of the ground speed and an estimate of the acceleration which are generated by the Kalman filter (Kc), and implements a PID controller which generates commands addressed to the thrusters (PL1, PL2; PT) of the airship (1).

9. The airship (1) according to the preceding claim, **characterized in that** the ground speed controller (Sc) implements a dynamic flight simulation model to provide linear-quadratic regulation (LQR).

10. A method for damping the oscillation of a payload (2) lifted by an airship (1) according to claim 1, said method comprising the following steps:
• a measurement, using the angle measurement module (Ma), of the angle formed by the cable with respect to the vertical, both in a longitudinal plane (αL) and in a transverse plane (αT), and a measurement, using the length measurement module (Ml), of the length (l(t)) of deployed cable between the first end and the second end;
• a damping control, using the damping controller (Dc), comprising determining speed adjustments of the airship (1) on the basis of the measurements carried out, in order to produce speed control commands for damping the pendular oscillations of the load (2);
• a position control, using the position controller (Pc), comprising generating speed control commands in order to keep the airship (1) above the handover zone;
• a combination, using the computing module (Su), of the speed control commands determined by the damping controller (Dc) and the position controller (Pc) in order to generate a final speed control command;
• a speed control, using the speed controller (Sc), in order to generate thrust commands for the thrusters of the airship,
**characterized in that** the damping control comprises computing an oscillation frequency of the payload on the basis of the deployed cable length measurement delivered by the length measurement module (Ml) and on the basis of a local gravity value, and a proportional-integral-derivative (PID) control intended to process the longitudinal and transverse angle measurements, respectively, delivered by the angle measurement module (Ma) and to deliver the longitudinal and lateral speed control commands, respectively, to the longitudinal and lateral thrusters (PL1, PL2; PT) of the airship (1), respectively.

11. The method according to the preceding claim, **characterized in that** the step of angle measurement (Ma) comprises measuring a relative angle between the cable (3) and the vertical axis of the airship (1).

12. The method according to the preceding claim, **characterized in that** the step of angle measurement (Ma) comprises compensating for the relative angle thus measured to take account of the attitude angle of the airship (1), using measurements from an attitude and heading reference system (AHRS) in order to determine the relative angle of the cable (3) with respect to the Earth vertical.

13. The method according to claim 11 or 12, **characterized in that** the step of cable length measurement (Ml) comprises estimating the length of deployed cable on the basis of information on the angular position of the winch, the winch radius and the possible pulley ratio in the path of the cable (3) between the winch and a deployment point of the cable (3).

14. The method according to the preceding claim, **characterized in that** the position control (Pc) is configured to process an estimate of the ground speed and an estimate of the position of the airship (1), and comprises a proportional-derivative (PD) control which generates a speed control command intended to be sent to the computing module (Su).

15. The method according to the preceding claim, **characterized in that** the position control (Pc) further implements Kalman filtering (Kc) intended to process information on ground speed (S), acceleration and position of the airship (1) generated by an attitude and heading reference system (AHRS) and a satellite-based geolocation and navigation system (GNSS).

16. The method according to the preceding claim, **characterized in that** the position control (Pc) implements a dynamic flight simulation model to provide linear-quadratic regulation (LQR).

17. The method according to the preceding claim, **characterized in that** the ground speed control (Sc) of the airship (1) is intended to process as input an estimate of the ground speed and an estimate of the acceleration which are generated by the Kalman filter (Kc), and comprises a PID control which generates commands addressed to the thrusters (PL1, PL2; PT) of the airship (1).

18. The method according to the preceding claim, **characterized in that** the ground speed control (Sc) implements a dynamic flight simulation model to provide linear-quadratic regulation (LQR).
